Europäisches Patentamt

(19) European Patent Office

Office européen des brevets

(11) Publication number: **0 224 949**
**B1**

## EUROPEAN PATENT SPECIFICATION

(45) Date of publication of the patent specification:
28.02.90

(51) Int. Cl.⁴: **F16H 13/00**, F16H 23/00

(21) Application number: 86201988.2

(22) Date of filing: 13.11.86

(54) Friction-disk transmission comprising a tiltable disk.

(30) Priority: 15.11.85 NL 8503140

(43) Date of publication of application:
10.06.87 Bulletin 87/24

(45) Publication of the grant of the patent:
28.02.90 Bulletin 90/9

(84) Designated Contracting States:
CH DE FR GB IT LI NL SE

(56) References cited:
FR-A- 528 820
FR-A- 1 460 251
GB-A- 328 907
NL-A- 66 380

(73) Proprietor: N.V. Philips' Gloeilampenfabrieken,
Groenewoudseweg 1, NL-5621 BA Eindhoven(NL)

(72) Inventor: Koster, Marinus Pieter, c/o INT.
OCTROOIBUREAU B.V. Prof. Holstlaan 6, NL-5656 AA
Eindhoven(NL)
Inventor: Soemers, Hermanus Mathias Joannus Ren, c/o
INT. OCTROOIBUREAU B.V.öProf. Holstlaan 6,
NL-5656 AA Eindhoven(NL)
Inventor: Dona, Marinus Josephus Jakobus, c/o INT.
OCTROOIBUREAU B.V. Prof. Holstlaan 6, NL-5656 AA
Eindhoven(NL)

(74) Representative: Cuppens, Hubertus Martinus Maria et
al, INTERNATIONAAL OCTROOIBUREAU B.V. Prof.
Holstlaan 6, NL-5656 AA Eindhoven(NL)

ACTORUM AG

## Description

The invention relates to a friction-disk transmission comprising a first shaft and a second shaft which are rotatable about a common axis of rotation, said shafts being substantially axially aligned with each other, and a circular disk which is arranged between the first and second shafts and which is tiltable about two orthogonal tilting axes which intersect each other at a point on said axis of rotation and are each perpendicular to this axis, the disk being tiltable by means of a drive which is coupled with the disk eccentrically with respect to said axis of rotation, and rotation of the disk about said axis of rotation being blocked by a stationary fixing member and the rotation of the disk about the tilting axes being determined inter alia by a disk-shaped supporting member coupled with the second shaft.

In such a generic disk transmission known from British Patent Specification 328907, the supporting member comprises a further disk which is secured to the second, output shaft and is provided with a lemniscate groove in which the tiltable disk is guided by means of balls. The fixing member is constituted by a fixedly arranged gear ring in which a toothed part rolls which is provided on the tiltable disk.

Upon reversal of the direction of rotation of the first and the second shaft of that known disk transmission is that a lost motion occurs due to the clearance with which the balls are guided in the lemniscate groove. Furthermore, it is fairly difficult to vary the transmission ratio because it depends upon the shape of the lemniscate groove. The need for teeth on both the tiltable disk and the fixing member and a relatively complicated guiding groom in the supporting member causes the known disk transmission to be relatively expensive.

The invention has for its object to further develop said generic friction-disk transmission.

For this purpose, the invention is characterized in that the tiltable disk is supported in an annular spring which is secured around its outer periphery to the fixing member and around its inner periphery to the tiltable disk, while the disk can be rolled with frictional contact on the supporting member, a corresponding circular path of the point of contact between the disk and the supporting member occupying a fixed axial position with respect to the axis of rotation.

By the use of an annular spring in conjunction with an engagement of the disk with a supporting member excluding an axial displacement of the contact point, the tilting movements about the two tilting axes can be obtained by deformation of the spring, which serves at the same time as a support for the disk. Thus, the disk can be journalled in a considerably simpler manner. Furthermore, the transmission is free of clearance.

A preferred embodiment of the frictional disk transmission, in which the transmission ratio mainly depends upon the apex of a cone corresponding to a conical path on the supporting member, is further characterized in that the supporting member is provided with a curved first running surface, while the disk is provided with a conical second running surface cooperating with the first running surface, the apex of the cone corresponding to the second running surface coinciding with the point of intersection of the two tilting axes on the common axes of rotation.

A further embodiment of the friction-disk transmission, in which the angular position of the disk with respect to the axis of rotation is defined in a comparatively simple manner, is characterized in that the first shaft is coupled with an end - arranged eccentrically with respect to the common axis of rotation - of a clamping bush which is rotatable about the common axis of rotation by means of a draw rod arranged in the clamping bush and rotatable about said axis of rotation, this clamping bush causing, through a rotational bearing tilted with respect to said axis of rotation and a sleeve provided with slots and tilted with respect to said axis of rotating, the annular spring to be deflected and defining the tilting angle of the disk, while a U-shaped spring urges the disk against the supporting member at the contact point.

A further embodiment of a friction-disk transmission, in which the angular position of the disk with respect to the axis of rotation is also defined in a further comparatively simple manner, is characterized in that the first shaft is provided with an eccentrically arranged end, which causes the annular spring to be deflected via a rotational bearing and a sleeve provided with cuts and tilted with respect to the common axis of rotation and defining the tilting angle of the disk, while a flexible rod defines the tilting point of the disk in the direction of said axis of rotation, at least one further sleeve provided with slots urging the supporting member against the disk at the contact point.

A still further embodiment of the friction-disk transmission, which is particularly suitable for use in devices having a vacuum-tight separation between the first and the second shaft, is further characterized in that the annular spring is a closed flexible diaphragm forming a vacuum-tight seal between the first and the second shaft.

Embodiments of the invention will be described more fully and by way of example with reference to the drawings, in which:

Fig. 1 shows diagrammatically a preferred embodiment of the friction-disk transmission;
Fig. 2 is a longitudinal sectional view of a friction-disk transmission as shown in Fig. 1;
Fig. 3 shows on an enlarged scale a detail of the friction-disk transmission shown in Fig. 2;
Fig. 4 is a perspective view of a part of a sleeve provided with slots;
Fig. 5 is a perspective view of a U-shaped spring used in the friction-disk transmission shown in Fig. 2;
Fig. 6 is a longitudinal sectional view of a second embodiment of the friction-disk transmission;
Fig. 7 shows diagrammatically a third embodiment of the friction-disk transmission;
Fig. 8 shows diagrammatically a fourth embodiment of the friction-disk transmission.

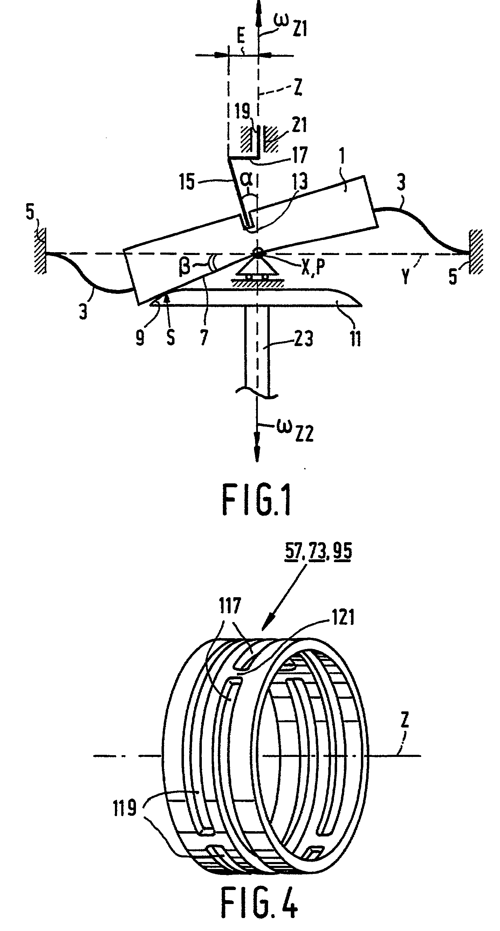

The first embodiment of the friction-disk transmission shown in Fig. 1 comprises a circular disk 1 tiltable about an X-axis (at right angles to the plane of the drawing) and a Y-axis which intersect one another at a point P. Rotation of the disk 1 about the Z-axis is prevented by a flexible annular closed diaphragm 3 which in the unloaded condition lies in a plane which is intersected at right angles by the Z-axis at the point P. The diaphragm is clamped around its inner periphery in the disk 1 and around its outer periphery in an annular fixing member 5. The disk 1 is provided on the lower side with a conical surface 7. The apex of the cone corresponding to the surface 7 coincides with the point P. At a point S the disk 1 is urged against a curved peripheral surface 9 of a rotatably arranged supporting member 11 in the form of a circular disk. The path of the point of contact S between the disk 1 and the supporting member 11 as the latter rotates is circular and lies in a plane which is intersected at right angels by the Z-axis. A recess 13 in the upper side of the disk 1 receives a coupling rod 15, which is connected by means of a crank rod 17 having a length E to a first, input shaft 19. The shaft 19 is rotatably supported in a bearing 21. Although the clearance with which the coupling rod 15 is received by the recess 13 is shown on an exaggerated scale in Fig. 1, it is to be assumed that the rod has only a light sliding fit in the recess. It is to be further assumed that both the recess 13 and the coupling rod 15 have a circular cross-section. The disk-shaped supporting member 11 has secured to it a second, output shaft 23 which is rotatable about the Z-axis and cannot perform a translation in the direction of this axis. The Z-axis constitutes the geometric axis about which the first and second shafts rotate in common at angular speeds $\omega_{Z1}$ and $\omega_{Z2}$, respectively. The coupling rod 15 extends in a direction at right angles to the upper surface of the disk 1 and encloses an angle $\alpha$ with the Z-axis. The Y-axis and the generatrix of the cone corresponding to the surface 7 together enclose an angle $\beta$. The transmission ratio between the first shaft 19 and the second shaft 23 satisfies the relation:

$$\frac{\omega_{Z2}}{\omega_{Z1}} = -\tan\alpha \cdot \tan\beta \, ,$$

the directions of rotation of the two shafts consequently being opposite to each other. During rotation of the two shafts, the disk 1 performs a tilting movement about an axis passing through the point P and rotating in a plane at right angles to the Z-axis through the point P at an angular speed $\omega_{Z1}$. This tilting movement can be considered as a simultaneous tilting movement about two orthogonal tilting axes, namely the X-axis and the Y-axis. In the present case, $\alpha = 0.5°$, while $\beta = 13°$ so that:

$$\frac{\omega_{Z2}}{\omega_{Z1}} = \frac{-1}{500} \, .$$

The contact point S is to be considered as a point in which rolling takes place without any slip/

Since the angle $\alpha$ has a limited value due to the permissible deformation of and stress in the diaphragm 3, in practice a large range of transmission ratios is obtained by varying the angle $\beta$.

The invention will now be described in reference to two practical embodiments according to the principle described about with reference to Fig. 1. In particular the mechanism is concerned by means of which the tilting angle $\alpha$ is obtained.

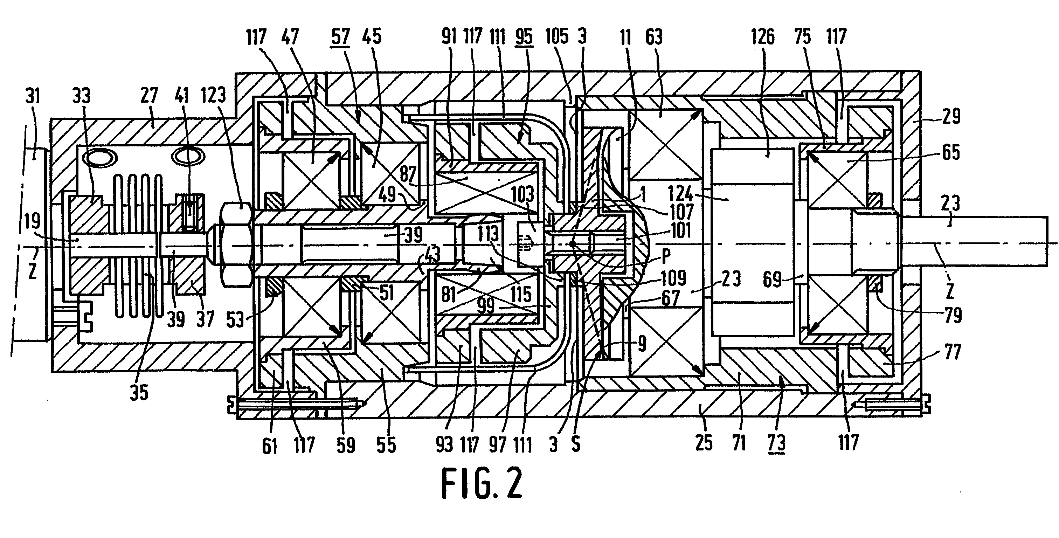

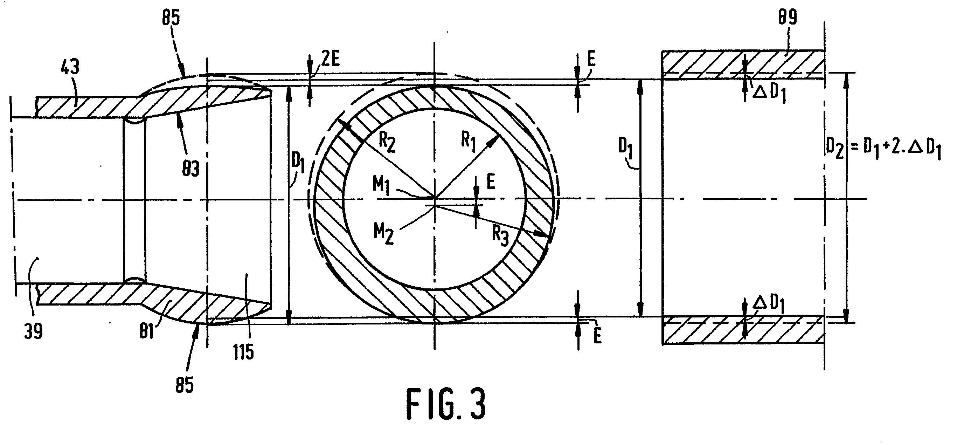

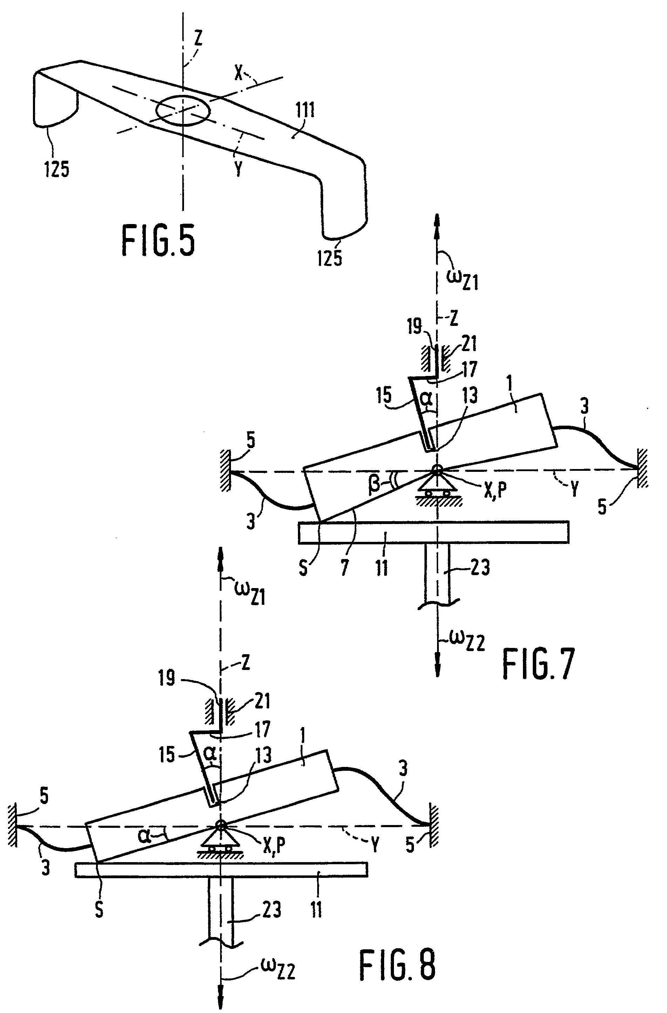

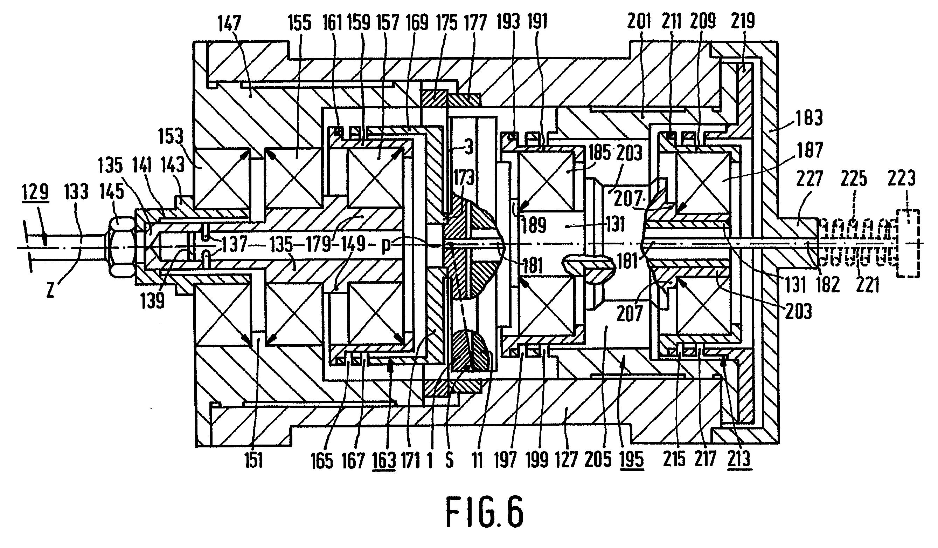

The friction-disk transmission shown in Fig. 2 comprises a metal circular-cylindrical housing 25, whose central axis coincides with the Z-axis. The housing 25 is provided at the left-hand end with a metal cup-shaped cover 27 and at the right-hand end with a dish-shaped cover 29 also of metal. The first, input shaft 19 is constituted by the driving shaft of an electric motor 31. By means of a coupling comprising a metal collar 33 secured on the shaft 19, a bellows- type coupling member 35 and a metal collar 37, a metal draw rod 39 is driven, whose central axis coincides with the Z-axis. It should be noted that the draw rod 39 can also be considered as the input shaft; for example, a driven pulley may be mounted on the draw rod 39 and the shaft 19 dispensed with. The coupling member 35 is secured at the left-hand end to the collar 33 and at the right-hand end to the collar 37, which is secured by a grub-screw 41 to the draw rod 39. The draw rod 39 extends into a metal clamping bush 43 (to be described more fully with reference to Fig. 3) on which the inner races of two ball-bearings 45 and 47 are glued. The inner race (not shown in Fig. 2) of the ball-bearing 45 is enclosed in the axial direction between a shoulder 49 on the clamping bush 43 and a metal spacer ring 51, while the inner race (not shown in Fig. 2) of the ball-bearing 47 is enclosed in the axial direction between the spacer 51 and a metal screw ring 53, which is screwed onto a threaded part of the draw rod 39. The outer race (not shown in Fig. 2) of the ball-bearing 5 is enclosed both in the axial and in the radial direction by a part 55 of a so-called concertina sleeve 57 of metal, which urges the ball-bearing 45 free of clearance and will be described more fully with reference to Fig. 4. The part 55 is fixedly arranged in the housing 25. The outer race (not shown in Fig. 2) of the ball-bearing 47 is enclosed both in the axial and the radial direction in a metal sleeve 59 which is secured to a part 61 of the concertina sleeve 57, which part 61 is displaceable in the axial direction with respect to the part 55 by means of the screw ring 53.

The second, output shaft 23 is journalled in two ball-bearings 63 and 65, whose inner races (not shown) engage in the axial direction a shoulder 67, and a shoulder 69, respectively, on the shaft 23. The inner races of the ball-bearings 63 and 65 are also glued on the second shaft 23. The outer race (not shown) of the ball-bearing 63 is enclosed both in the axial and in the radial direction in a part 71 of a so-called concertina sleeve 73 of metal which urges the ball-bearing 63 free of clearance and is of the same type as the concertina sleeve 57. The part 71 is fixedly arranged in the housing 25. The outer race (not shown) of the ball-bearing 65 is enclosed both in the axial and in the radial direction in a metal sleeve 75 which is secured to a part 77 of the concertina sleeve 73, which part 77 is displaceable in the axial direction with respect to the part 71 by means of a metal screw ring 79 on the second shaft 23. At its left-hand end the second shaft 23 is provided with a metal circular disk, which constitutes the supporting member 11. As stated, the metal tiltable disk 1 engages at the contact point S the curved peripheral surface 9 of the supporting member 11. The construction with which the angle $\alpha$ is obtained (in Fig. 1 the recess 13, the coupling rod 15 and the crank rod 17) will be described with reference to Figures 2, 3, 4 and 5, in which the construction of the concertina sleeves 57 and 73 will also be explained.

At its right-hand end the clamping bush 43 has a widened part 81 having a conical inner surface 83. Initially, the part 81 is wholly concentric with the central axis of the bush and is rotation-symmetrical about this axis and has a slightly convexly curved outer surface 85. By mounting the clamping bush 43 in a lathe with an eccentricity E and turning material off the outer surface 85 of the part 81, the cross-section is obtained which is shown in full lines in the central part of Fig. 3. The originally largest outer diameter equal to $2R_2$ is thus reduced by a value 2E. The corresponding inner diameter amounts to $2R_1$. The material removed on the lathe is indicated by the difference in surface between a circle having a diameter equal to $2R_2$ and a centre $M_1$ and a circle having a diameter equal to $2R_3$ and a centre $M_2$. The distance between $M_1$ and $M_2$ is E. The part 81 of the clamping bush 43 is inserted into a needle bearing 87 (cf. Fig. 2), of which Fig. 3 only shows an inner race 89. In order to facilitate the insertion, the inner diameter $D_2$ of the inner race 89 is made slightly larger than the maximum outer diameter $D_1$ of the part 81 so that $D_2 = D_1 + 2. \Delta D_1$. If the inner diameter of the inner race 89 is fixed, $D_1$ can of course be made slightly smaller ( $\Delta D_1$ ) than $D_2$. It should be noted that the eccentricity E is considerably larger than $\Delta D_1$. In the present case, E is equal to 0.1 mm, while $\Delta D_1$ is equal to 2 μm. The outer race (not shown in Fig. 2) of the needle bearing 87 is secured to a metal sleeve 91, on which a part 93 of a metal concertina sleeve 95 is mounted. This concertina sleeve 95 is of the same type as the aforementioned concertina sleeves 57 and 73. The concertina sleeves 57, 73 and 95 are not rotatable about the Z-axis. All concertina sleeves have a low resistance to bending, are yieldable in the axial direction, have a high resistance to torsion and have a high resistance to deformation by transverse forces. The concertina sleeve 95 further has a part 97 which by elastic deformation is displaceable with respect to the part 93. Also, the concertina sleeve 95 differs from the concertina sleeves 57 and 73 in that it has a flange 99. By means of a bolt 103 screwed into an axial bore 101 in the tilting disk 1, the flange 99 is secured to the tilting disk 1. The diaphragm 3 is clamped around its outer periphery between an internal shoulder 105 on the housing 25 (fixing member) and the left-hand end of the concertina sleeve 73. Around its inner periphery the diaphragm 3 is clamped between a shoulder 107 on the tilting disk 1 and a metal spacer ring 109. A prestressed U-shaped metal spring 111 supported on the left-hand side from the concertina sleeve 57 (cf. Fig. 5) presses on the right-hand side against the spacer ring 109 and is held on the left-hand side by a shoulder 113 on the flange 99 of the concertina sleeve 95. The spring 111 produces the contact force at the contact point S between the disk 1 and the supporting member 11. The draw rod 39 is provided with a conical end portion 115, whose surface corresponds to the conical inner surface 83 of the clamping bush 43.

As can be seen from Fig. 4, each of the concertina sleeves 57, 73 and 95 is provided with a pair of slots 117 which extend circumferentially of the sleeve in one radial plane and a pair of slots 119 which extend circumferentially of the sleeve in another radial plane spaced axially from the first plane, the two pairs of slots being displaced by 90° with respect to each other circumferentially of the sleeve. Between the two slots of each pair are two bridges of material, such as the bridge designated 121 in Fig. 4. For the sake of simplicity, the slots of the concertina sleeves 57, 73 and 95 are designated in Fig. 2 by the same reference numeral 117. It will be appreciated that the concertina sleeves 57, 73 and 95 have to be able to readily take up axial deformations (yieldable in the axial direction) in the direction of the Z-axis and deformations (low resistance to bending) about the X-axis and the Y-axis.

When the end part 81 of the clamping bush 43 is inserted into the inner race 89 of the needle bearing 87, the needle bearing 87, the sleeve 91 and the concertina sleeve 95 will thereby become so located that their central axes are eccentric wit respect to the Z-axis, while they are also capable of performing a tilting movement with respect to the part 81. The eccentricity amounts to E and the tilting angle is equal to $\alpha$. As a result of the tilting movement of the concertina sleeve 95 through the angle $\alpha$, the tilting disk 1 coupled therewith also tilts through an angle $\alpha$. The part 81 is so proportioned that the point of its engagement with the inner race 89 of the needle bearing 87 along the Z-axis is located halfway along the needle bearing 87 and also halfway along the concertina sleeve 95. Thus, the moment to be transmitted by the concertina sleeve 95 is limited to a minimum so that the concertina sleeve 95 can tilt at the point P during mounting. Since the inner diameter of the inner ball race 89 has a clearance $2\Delta D_1$ with respect to the part 81, the draw rod 39 is drawn by means of a tensioning nut 123 (cf. Fig. 2). Thus, the part 81 is slightly expanded and the clearance disappears. The needle bearing 87 is now fixed with its inner race 89 with respect to the part 81, the central axis of the bearing enclosing the tilting angle $\alpha$ with the Z-axis. The needle bearing 87 has the property that its inner race can perform a relative translation with respect to its outer race along the central axis of the bearing both during mounting and during operation. Only a small internal frictional force in the bearing need then be overcome. Since during the process of eccentrically arranging the needle bearing and the tilting which then occurs about the point P the inner and outer races of the needle bearing 87 have different tilting radii, the inner race performs a relative translation with respect to the outer race. By thus utilizing this property of the needle bearing, it can be prevented that the concertina sleeve 95 is additionally loaded during tilting. In principle, the concertina sleeve 95 could take up by deformation in the axial direction the difference between the tilting radii of the inner and outer ball races, but at the expense of a considerable amount of force. It should be noted that the part 97 of the concertina sleeve 95 is arranged to surround the sleeve 91 with clearance. Although the absence of this clearance would permit deformation of the concertina sleeve 95 in the direction of the Z-axis, the concertina sleeve 95 would be prevented thereby from bending during mounting. Deformation in the direction of the Z-axis is necessary in order to prevent the support of the tilting disk 1 from being statically overloaded. During operation, the contact point S is already defined in the direction of the Z-axis so that the tilting point P has to be able to perform small axial displacements in order that it can take up any alignment errors or angular errors of the first shaft 19 with respect to the second shaft 23. This can be obtained due to the relative displaceability of the inner and outer races of the needle bearing 87. Furthermore, bending of the concertina sleeve 95 is necessary to be able to take up any alignment errors or angular errors of the first shaft 19 and the second shaft 23. The U-shaped spring 11 has to be able to perform a radial displacement at the area at which it is clamped on the tilting disk 1 because the spring engages the tilting disk in a plane which does not pass through the tilting point P. In order to facilitate this displacement, the limbs of the spring 111 are provided with rounded ends 125 (cf. Fig. 5).

Between the ball-bearings 63 and 65, the output shaft 23 is provided with a smooth cylindrical part 124 which is located in a chamber 126. This provides the possibility of driving with part 124 via a friction transmission a translation rod which passes to the exterior of the housing 25. Such an additional driving possibility in principle resembles a rack-and-pinion transmission, by means of which a rotary movement is converted into a translatory movement.

The second embodiment of the friction-disk transmission shown in Fig. 6 comprises a circular-cylindrical metal housing 127, whose central axis coinces with the Z-axis constituting the geometric common axis of rotation of a driven first,input shaft 129 and a second, output shaft 131. The first shaft 129 has a solid part 133 and a tubular part 135 integral therewith. The tubular part 135 is provide wit two axially spaced pairs of circumferentially extending slots 137 and 139, which pairs of slots are circumferentially displaced by 90° with respect to each other, so that the part 135 acts as a so-called concertina sleeve of the kind already described with reference to Fig. 4. The shaft 129 is inserted into a metal sleeve 141, which is provided with a shoulder 143, and the shaft 129 has a thickened threaded part onto which is screwed a nut 145 which engages the sleeve 141 and presses the latter against the tubular part 135 of the shaft 129. The assembly constituted by the shaft 129, the nut 145 and the sleeve 141 is therefore rotatable about the Z-axis. The housing 127 accommodates a metal sleeve 147, whose central axis coincides with the A-axis. The tubular part 135 of the shaft 129 is provided with a shoulder 149, while the sleeve 147 is provided with a shoulder 151. By means of two ball-bearings 153, 155, the shaft 129 is supported in the housing 127. the inner race of the ball-bearing 153 which is enclosed between the shoulders 143 and 151, is glued on the sleeve 141, while the outer race of the ball-bearing 153 is glued in the sleeve 147. The inner race of the ball-bearing 155, enclosed between the shoulders 149 and 151, is glued on the part 135 of the shaft 129, while the outer race is also glued in the sleeve 147. A ball-bearing 157 is enclosed between the shoulder 149 and a metal sleeve 159 which is pressed against a part 161 of a metal concertina sleeve 163 provided with two pairs of circumferentially extending slots 165 and 167. A part 169 of the concertina sleeve 163 is arranged to surround the sleeve 159 with clearance. The inner race of the ball-bearing 157 is again glued on the part 135 of the shaft 129, while its outer race is glued in the sleeve 159. The concertina sleeve 163 is provided on its side facing the tilting point P with a flange 171 formed with a shoulder 173. The diaphragm 3 is clamped around its outer periphery between a pair of metal rings 175 and 177 (fixing members) held by the sleeve 147. The diaphragm 3 is clamped around its inner periphery between the shoulder 173 on the flange 171 and the tilting disk 1. The tilting disk 1, whose central axis encloses a tilting angle $\alpha$ with the Z-axis, is located in the contact point S so as to press with its conical surface against a curved peripheral surface of the disk-shaped supporting member 11 (compare Fig. 1). The supporting member 11 occupies a fixed position along the Z-axis. The contact force at the contact point S is produced by an axial pre-tension force of the two concer tina sleeves 135 and 163, which also urge the ball-bearings 153, 155 and 157 free of clearance. The tubular part 135 of the shaft 129 is provided with an end portion 179 which is formed so as to be eccentric with respect to the Z-axis and on which is glued the inner race of the ball-bearing 157. The eccentricity of the cylindrical end portion 179 is equal to E and is arranged (not shown) so that the central axis of this end portion passes through the point P and encloses the tilting angle $\alpha$ with the Z-axis. The position of the tilting point P along the Z-axis is fixed by a flexible metal rod 181 secured at the centre of the tilting disk 1. In the case of alignment errors or angular errors of the input shaft with respect to the output shaft, the contact point S can perform a displacement in the direction of the Z-axis due to the axial deformability of the concertina sleeves 195 and 213. The wire-like rod 181 is secured at its end 182 remote from the tilting disk 1 in a metal cover 183. The hollow output shaft 131, which is integral with the supporting member 11, is journalled in two ball-bearings 185 and 187. The inner race of the ball-bearing 185 which is enclosed between a shoulder 189 of the shaft 131 and a metal sleeve 191, is glued on the shaft 131, while its outer race is glued in the sleeve 191. The sleeve 191 is engaged by a part 193 of a concertina sleeve 195 which is provided with two pairs of circumferentially extending slots 197 and 199 and of which a part 201 is fixedly arranged in the housing 127. The concertina sleeve 195 urges the ball-bearing 185 free of clearance. On the shaft 131 is mounted a friction roller 203 on which the inner race of the ball-bearing 187 is glued. The friction roller 203 is rotatable in a chamber 205, into which a translation rod can be inserted to engage the friction roller 203. The translation rod, which passes to the exterior of the housing and is not shown for the sake of simplicity, can be used in a translation transmission. The ball-bearing 187, enclosed between a shoulder 207 on the friction roller 203 and a metal sleeve 209 has its outer race glued in the sleeve 209. The sleeve 209 is engaged by a part 211 of a concertina sleeve 213 which is provided with two pairs of circumferentially extending slots 215 and 217 and of which a part 219 is fixedly arranged in the housing 127. The concertina sleeve 213 urges the ball-bearing 187 free of clearance.

It should be noted that any alignment errors of the shafts 129 and 131 can be neutralized by deformation of the concertina sleeves 163, 195 and 213 in the direction of the Z-axis. Since the point P is fixed and the contact point S is axially displaceable with axial deformation of the concertina sleeves 195 and 213, the support of the tilting disk 1 is prevented from being statically overloaded. The contact force at the contact point S produced by the pre-tension force of the concertina sleeves 195 and 213 may alternatively be obtained by lengthening the rod 181 at 221 by a flange 223 and pre-stressing the rod by means of a spring 225. The end 182 of the rod 181 is then slidable axially in a bearing 227, which forms part of the cover 183. In this case the axially deformable concertina sleeve 195 cannot be retained because the position of the tilting point P is then no longer defined. The sleeve 191 may for this purpose be secured, for example, directly to the housing 127.

The friction-disk transmission described with reference to Figures 2 and 6 satisfy the principle shown in Fig. 1. However, whilst maintaining this principle, a number of variations are possible, as will be explained diagrammatically with reference to Figures 7 and 8.

In a third embodiment shown in Fig. 7, the tilting disk 1 engages at the contact point S the flat upper surface of a supporting member 11 in the form of a circular disk. At the area of the contact point S, the tilting disk 1 is preferably provided with a small rounded portion in order to prevent the tilting disk 1 from digging into the supporting member 11. The transmission ratio satisfies the relation:

$$\frac{\omega_{Z2}}{\omega_{Z1}} = \tan\alpha . \tan\beta .$$

By varying the angle $\beta$, a large range of transmission ratios can be obtained.

In a fourth embodiment shown in Fig. 8, the tilting disk 1 consists of a circular disk having parallel flat surfaces. The conical surface 7 of Fig. 7 is not present in this case so that $\beta=\alpha$ and the transmission ratio satisfies the relation:

$$\frac{\omega_{Z2}}{\omega_{Z1}} = -\tan^2\alpha .$$

In this case, the treatment ratio can be varied only by varying the tilting angle $\alpha$. However, this requires a more extensive change in the construction than a variation of the angle $\beta$

The annular spring 3 may be in the form of a closed diaphragm or alternatively it may be an opening spring, for example in the shape of an inner and an outer ring which are interconnected by flexible spokes (waggon-wheel shape). These spokes may extend radially as wall as partly radially and partly tangentially. A closed diaphragm affords the advantage that a vacuum-tight passage is automatically obtained. This is of major importance, for example, if the friction-disk transmission is used in goniometers in electron microscopes, X-ray diffractometers and X-ray spectrometers as well as in the manufacture of integrated semi-conductor circuits, in lithographic apparatus (for example, pattern generators, wafer steppers, ion implanters).

The friction transmission can be driven by means of electric motors of different types, if derived with an additional reduction stage between the output shaft of the electric motor and the input shaft 19 and the draw rod 39, respectively, of the friction-disk transmission. Mention is more particularly made of the use of a stepping motor. If, for example, in the present case, with a transmission ratio

$$\frac{\omega_{Z2}}{\omega_{Z1}} = \frac{-1}{500}$$

a stepping motor is used, in which 200 pulses correspond to one complete revolution of the input shaft of the friction-disk transmission, a carriage coupled with the transmission can be displaced over a distance of 0.4 µm per pulse. It is clear that the transmission affords particular advantages in performing very small displacements, such as required, for example, in micro-manipulators.

The conical surface 7 may have an orientation other than that shown; in other words, it may occupy a position which is a mirror image of the position shown in Fig. 1. The curved peripheral surface 9 of the supporting member 11 may alternatively have a form to a conical contour. In the present case, the annular spring (diaphragm) 3 is made of chromium-nickel steel having a thickness of 0.1 mm, a free inner diameter of 5 mm and a free outer diameter of 16 mm. These dimensions make it clear that with the transmission described a very compact construction is obtained.

## Claims

1. A friction-disk transmission comprising a first shaft (19; 129) and a second shaft (23; 131) , which are rotatable about a common axis of rotation (Z), said shafts being substantially axially aligned with each other, and a circular disk (1) which is arranged between the first and second shafts and which is tiltable about two orthogonal tilting axes (X, Y) which intersect each other at a point on said axis of rotation (Z) and are each perpendicular to this axis (Z), the disk (1) being tiltable by means of a drive which is coupled with the disk eccentrically with respect to said axis of rotation, and rotation of the disk (1) about said axis of rotation (Z) being blocked by a stationary fixing member (25; 127) and the rotation of the disk about the tilting axes being determined <u>inter alia</u> by a disk-shaped supporting member (11) coupled with the second shaft, characterized in that the tiltable disk (1) is supported on an annular spring (3) which is secured around its outer periphery to the fixing member and around its inner periphery to the tiltable disk, while the disk can be rolled with frictional contact on the supporting member, a corresponding circular path of the point of contact (S) between the disk and the supporting member occupying a fixed axial position with respect to the axis of rotation.

2. A friction-disk transmission as claimed in Claim 1, characterized in that the supporting member (11) is provided with a curved first running surface (9), while the disk is provided with a conical second running surface (7) cooperating with the first running surface, the apex of the cone corresponding to the second running surface coinciding with the point of intersection of the two tilting axes on the common axis of rotation.

3. A friction-disk transmission as claimed in Claim 1, characterized in that the first shaft (19) is coupled with an end-arranged eccentrically with respect to the common axis of rotation - of a clamping bush (43) which is rotatable about the common axis of rotation by means of a draw rod (39) arranged in the clamping bush and rotatable about said axis of rotation, this clamping bush causing, through a rotational bearing tilted with respect to said axis of rotation and a sleeve (95) provided with slots (117, 119) and tilted with respect to said axis of rotation, the annular spring (3) to be deflected and defining the tilting angle of the disk, while a U-shaped spring (111) urges the disk (1) against the supporting member (11) at the contact point. (Fig. 2, 3, 4).

4. A friction-disk transmission as claimed in Claim 1, characterized in that the first shaft (129) is provided with an eccentrically arranged end (179), which causes the annular spring (3) to be deflected <u>via</u> a rotational bearing (157) and a sleeve (163), provided with slots (165, 167) and tilted with respect to the common axis of rotation and defines the tilting angle of the disk, while a flexible rod (181) defines the tilting point of the disk in the direction of said axis of rotation, at least one further sleeve provided with slots urging the supporting member (11) against the disk at the contact point (Fig. 6).

5. A friction-disk transmission as claimed in Claim 1, characterized in that the annular spring (3) is a closed flexible diaphragm forming a vacuum-tight seal between the first and the second shaft.

## Patentansprüche

1. Reibscheibengetriebe mit einer ersten (19; 129) und einer zweiten Welle (23; 131), die um eine gemeinsame Rotationsachse (Z) drehbar sind, wobei diese Wellen gegeneinander im wesentlichen axial ausgerichtet sind, und mit einer kreisförmigen Scheibe (1), die zwischen den ersten und zweiten Wellen angeordnet und in bezug auf zwei orthogonale Kippachsen (X, Y) kippbar ist, die einander in einem Punkt auf der Rotationsachse (Z) schneiden und beide senkrecht zu dieser Achse (Z) verlaufen, wobei die Scheibe (1) mittels eines Antriebs kippbar ist, der in bezug auf die Rotationsachse mit der Scheibe exzentrisch gekuppelt ist, und Drehung der Scheibe (1) um die Rotationsachse (Z) von einem feststehenden Befestigungselement (25; 127) abgeblockt und die Drehung der Scheibe um die Kippachsen u.a. von einem scheibenförmigen, mit der zweiten Welle gekuppelten Trägerelement (11) bestimmt wird, dadurch gekennzeichnet, daß die kippbare Scheibe (1) in einer ringförmigen Feder (3) unterstützt wird, die an ihrem Außenumfang am Befestigungselement und an ihrem Innenumfang an der kippbaren Scheibe befestigt ist, während die Scheibe mit Reibkontakt auf dem Trägerelement gerollt werden kann, wobei ein entsprechender Kreisweg des Berührungspunktes (S) zwischen der Scheibe und dem Trägerelement eine fest axiale Lage gegen die Rotationsachse einnimmt.

2. Reibscheibengetriebe nach Anspruch 1, dadurch gekennzeichnet, daß das Trägerelement (11) mit einer gekrümmten ersten Lauffläche (9) versehen ist, während die Scheibe mit einer kegelförmigen zweiten Lauffläche (7) versehen ist, die mit der ersten Lauffläche zusammenarbeitet, wobei der Scheitelpunkt des Konus entsprechend der zweiten Lauffläche mit dem Schnittpunkt der beiden Kippachsen auf der gemeinsamen Rotationsachse zusammenfällt.

3. Reibscheibengetriebe nach Anspruch 1, dadurch gekennzeichnet, daß die erste Welle (19) mit einem in bezug auf die gemeinsame Rotationsachse exzentrisch angeordneten Ende einer Spannbüchse (43) gekuppelt ist, die mittels einer in der Spannbüchse angeordneten und um die Rotationsachse drehbaren Zugstange (39) drehbar ist, wobei diese Spannbüchse durch ein in bezug auf die Rotationsachse gekipptes Drehlager und eine mit Einschnitte (117; 119) versehene und in bezug auf die Rotationsachse gekippte Hülse (95) bewirkt, daß die Ringfeder (3) abgelenkt wird und den Scheibenkippwinkel bestimmt, wobei eine U-förmige Feder (111) die Scheibe (1) an das Trägerelement (11) am Kontaktpunkt preßt (Fig. 2, 3, 4).

4. Reibscheibengetriebe nach Anspruch 1, dadurch gekennzeichnet, daß die erste Welle (129) mit einem exzentrisch angeordneten Ende (179) versehen ist, das die Ablenkung der Ringfeder (3) über ein Drehlager (157) und einer mit Einschnitte (165, 167) versehenen und in bezug auf die gemeinsame Rotationsachse gekippten Hülse (163) bewirkt und den Scheibenkippwinkel bestimmt, während eine biegsame Stange (181) den Scheibenkippunkt in der Richtung der Rotationsachse bestimmt, wobei wenigstens eine weitere eingeschnittene Hülse das Trägerelement (11) auf dem Kontaktpunkt an die Scheibe preßt (Fig. 6).

5. Reibscheibengetriebe nach Anspruch 1, dadurch gekennzeichnet, daß die Ringfeder (3) eine geschlossene biegsame Membran ist, die eine Vakuumabdichtung zwischen der ersten und der zweiten Welle bildet.

**Revendications**

1. Transmission à disque de friction comprenant un premier arbre (19; 129) et un second arbre (23; 131) qui peuvent tourner autour d'un axe de rotation commun (Z), les arbres étant quasiment alignés axialement – l'un par rapport à l'autre, et un disque circulaire (1) qui est disposé entre le premier et le second arbre et qui peut s'incliner autour de deux axes d'inclinaison orthogonaux (X, Y) qui se coupent en un point situé sur l'axe de rotation (Z) et qui sont perpendiculaires chacun a cet axe (Z), le disque (1) pouvant être incliné à l'aide d'un mécanisme d'entraînement qui est couplé au disque excentriquement par rapport à l'axe de rotation, et la rotation du disque (1) autour de l'axe de rotation (Z) étant bloquée par un organe de fixation immobile (25; 127), tandis que la rotation du disque autour des axes d'inclinaison est déterminée, entre autres, par un organe de support discoïde (11) couplé au second arbre, caractérisée en ce que le disque inclinable (1) est supporté dans un ressort annulaire (3) qui est fixé tout autour de sa périphérie externe à l'organe de fixation et tout autour de sa périphérie interne au disque inclinable, tandis que le disque peut être roulé avec un contact de frottement sur l'organe de support, un trajet circulaire correspondant du point de contact (S) entre le disque et l'organe de support occupant une position axiale fixe par rapport à l'axe de rotation.

2. Transmission à disque de friction suivant la revendication 1, caractérisée en ce que l'organe de support (11, est pourvu d'une première surface de roulement courbe (9) tandis que le disque est pourvu d'une seconde surface de roulement conique (7) coopérant avec la première surface de roulement, le sommet du cône correspondant à la seconde surface de roulement coïncidant avec le point d'intersection des deux axes d'inclinaison sur l'axe de rotation commun.

3. Transmission à disque de friction suivant la revendication 1, caractérisée en ce que le premier arbre (19) est couplé à une extrémité (disposée excentriquement par rapport à l'axe de rotation commun) d'une douille de serrage (43) qui peut tourner autour de l'axe de rotation commun à l'aide d'une tige de traction (39) disposée dans la douille de serrage et pouvant tourner autour de l'axe de rotation, cette douille de serrage provoquant, par l'intermédiaire d'un palier de rotation incliné par rapport à l'axe de rotation et d'une virole (95) pourvue de fentes (117; 119) et inclinée par rapport à cet axe de rotation, la déflexion du ressort annulaire (3) et définissant l'angle d'inclinaison du disque, tandis qu'un ressort en U (111) sollicite le disque (1) contre l'organe de support (11) au point de contact (Fig. 2, 3, 4).

4. Transmission à disque de friction suivant la revendication 1, caractérisée en ce que le premier arbre (129) est pourvu d'une extrémité disposée excentriquement (179), qui provoque la déflexion du ressort annulaire (3) par l'intermédiaire d'un palier de rotation (157) et d'une virole (163) pourvu de fentes (165; 167) et inclinée par rapport à l'axe de rotation commun et définissant l'angle d'inclinaison du disque, tandis qu'une tige flexible (181) définit le point d'inclinaison du disque dans le sens dudit axe de rotation, au moins une autre virole pourvue de fentes sollicitant l'organe de support (11) contre le disque au point de contact (Fig. 6).

5. Transmission à disque de friction suivant la revendication 1, caractérisé en ce que le ressort annulaire (3) est un diaphragme flexible clos formant un joint étanche au vide entre le premier et le second arbre.

# FIG.1

# FIG.4

**FIG. 2**

EP 0 224 949 B1

FIG.3

EP 0 224 949 B1

FIG.5

FIG.7

FIG.8

FIG.6

EP 0 224 949 B1